# EUROPEAN PATENT SPECIFICATION

(11) **EP 4 618 270 B1**
(45) Date of publication and mention of the grant of the patent: **06.05.2026**
(21) Application number: 24163873.3
(22) Date of filing: 15.03.2024
(51) Int. Cl.: H01M 50/209, H01M 50/358, H01M 50/367, H01M 50/55, H01M 50/211, H01M 50/553

(54) **SECTIONAL VENTING GAS GUIDANCE IN A BATTERY MODULE**
SEKTIONALE ENTLÜFTUNGSGASFÜHRUNG IN EINEM BATTERIEMODUL
GUIDAGE DE GAZ DE VENTILATION SECTIONNEL DANS UN MODULE DE BATTERIE

(43) Date of publication of application: 17.09.2025
(73) Proprietor: Samsung SDI Co., Ltd., Yongin-si, Gyeonggi-do 17084 (KR)
(72) Inventor: Reinprecht, Wolfgang, 8144 Attendorf (AT); Prossnigg, Florian, 8047 Graz (AT); Haring, Fritz, 8600 Bruck / Mur (AT)
(74) Representative: Gulde & Partner

(56) References cited:
- EP-B1- 2 056 375
- CN-A- 105 280 845
- DE-A1- 102013 204 087
- US-A1- 2016 036 033
- US-A1- 2023 246 289

## Description

### Field of the Disclosure

The present disclosure relates to a battery module that reduces a propagation of venting products along a battery cell stack included in the battery module (see as an example US 2016/036033 A1). Further, the present disclosure relates to a to a battery system including one or more of said battery modules. Also, the present disclosure relates to a vehicle including at least one of said battery modules and/or at least one of said battery systems.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time. Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

The mechanical integration of a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, for example in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g. in the mechanic's workshop, of the bulky battery systems becomes difficult.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

The state-of-the-art venting design of battery module is to use the free space inside a battery cell stack the vent gas can follow down to the exit of the battery pack into free air. A venting valve is the final "door" for the venting gas to the outside of the battery module. A battery system is robust in case of thermal propagation, when the vent gas or smoke outside the battery module is not ignited and causes a fire event over a certain period of time.

However, in such state-of-the-art designs, the propagation of venting products (such as hot venting gas as well as particles such as metallic and graphite particles) may affect other battery cells and/or the outer electrical components of other battery cells (e. g., terminals) and thus deteriorate their quality or even destroy them, e. g., by short circuits or arcing due to the conductive properties of the venting products.

Hence, there is a need for a design of a battery module, which prevents or at least considerably reduces a propagation of venting products - and, for example, the propagation of particles - from a battery cell affected by a thermal event such as a thermal run-away to other battery cells within the battery module.

It is thus an object of the present disclosure as defined by the independent claim to overcome or reduce at least some of the drawbacks of the prior art and to provide a battery module, a battery system, and a vehicle using the same, wherein the battery module, the battery pack, and the vehicle are each configured to avoid or at least considerably reduce a propagation of venting products - and, for example, the propagation of particles - from a battery cell affected by a thermal event such as a thermal run-away to other battery cells within the battery module.

### Summary of Invention

The invention is defined by the appended claims. The description that follows is subjected to this limitation. Any disclosure lying outside the scope of said claims is only intended for illustrative as well as comparative purposes.

According to a first aspect of the present disclosure, a battery module includes: a battery cell stack, the battery cell stack including a plurality of battery cells stacked along a first direction; each of the plurality of battery cells having a terminal side facing into a second direction, the second direction oriented non-parallel to the first direction, each of the terminal sides including a first terminal, a second terminal, and a venting outlet, the first terminal and the second terminal positioned on a virtual straight line extending parallel to a third direction oriented non-parallel to the first direction and non-parallel to the second direction; a venting space extending along the battery cell stack adjacent to the terminal sides, each of the venting outlets opening into the venting space; and a guiding means; wherein the first terminals are arranged in a first row of terminals, the second terminals are arranged in a second row of terminals, and the venting outlets are arranged in a row of venting outlets arranged in between the first row of terminals and the second row of terminals; wherein the guiding means includes a plurality of separator means, each of the separator means protruding from the battery cell stack into the venting space and extending transversely to the first direction; wherein the guiding means includes a back separator protruding from the battery cell stack into the venting space and extending transversely to the third direction; wherein the back separator is connected to each of the separator means, wherein each of the separator means extends from the back separator into the third direction; and wherein at least some of the venting outlets are positioned, with respect to the first direction, between two neighbored separator means; and wherein, for any two neighbored separator means, wherein the venting space formed between two neighbored separator means has an opening into the third direction.

A second aspect of the present disclosure relates to a battery system including one or more battery modules according to the first aspect of the present disclosure.

A third aspect of the present disclosure relates to a vehicle including at least one battery module according to the first aspect and/or at least one battery system according to the second aspect.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically, in a perspective view, a typical individual battery cell that may be used with embodiments of the battery module according to the present invention.
- Fig. 2: illustrates a schematic top-view of a battery module according to an embodiment.
- Fig. 3: illustrates a schematic cross-sectional of a battery module according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the y-axis. For example, the upper cover is positioned at the upper part of the y-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery module includes: a battery cell stack, the battery cell stack including a plurality of prismatic battery cells being stacked along a first direction; each of the battery cells having a terminal side facing into a second direction, the second direction being oriented non-parallel to the first direction, each of the terminal sides including a first terminal, a second terminal, and a venting outlet, the first terminal and the second terminal positioned on a virtual straight line extending parallel to a third direction being oriented non-parallel to the first direction and non-parallel to the second direction; a venting space extending along the battery cell stack adjacent to the terminal sides, each of the venting outlets opening into the venting space; and a guiding means; wherein the first terminals are arranged in a first row of terminals, the second terminals are arranged in a second row of terminals, and the venting outlets are arranged in a row of venting outlets arranged in between the first row of terminals and the second row of terminals; wherein the guiding means includes a plurality of separator means, each of the separator means protruding from the battery cell stack into the venting space and extending transversely to the first direction; wherein the guiding means includes a back separator protruding from the battery cell stack into the venting space and extending transversely to the third direction; wherein the back separator is connected to each of the separator means, wherein each of the separator means protrudes from the back separator into the third direction; and wherein at least some of the venting outlets are positioned, with respect to the first direction, between two neighbored separator means; and wherein, for any two neighbored separator means, the space formed between these two neighbored separator means has an opening into the third direction.

As can be taken from the above general description of the battery module according to the disclosure, the venting space formed adjacent to the terminal sides of the battery cells is at least partially sub-divided, by the plurality of separator means and the back separator, into a plurality of compartments, which may also be considered as venting-chambers. The compartments or venting-chambers serve as a collecting space for debris and dust ejected from the venting outlets of the one or more affected batteries in case of a thermal run-away. Generally spoken, the venting space is sub-divided, by the guiding means, into smaller portions so as to prevent an overall deposition of particles (debris and dust) flowing carried along by a venting gas in case of the thermal run-away.

As the compartments are opened only into the third direction, they are each confined in and against the first direction (by a pair of neighbored separator means), against the second direction (by one or more of the terminal sides of the battery cell stack), and against the third direction (by the back separator). In other words, with regard to a cross-section taken parallel to a plane spanned by the first and the third direction, the appearance of each of the compartments resembles a U-like shape, the opening of the U pointing into the third direction, while, of course, the curvature of the U may vary or be replaced by angled shapes.

Although not all the debris and/or dust generated by the thermal run-away may collect in the compartments and thus would be retained there, a large portion of the debris and/or dust will, depending on the shape of the compartments and the position of the venting outlets in relation to the compartments or the guiding means forming the compartments together with the terminal sides of the battery cells. Hence, embodiments of the shape of the guiding means as well as positions of the venting outlets with respect to the compartments / guiding means will be described later.

In the following, the first direction may also be referred to as the "stack direction."

In embodiments of the battery module according to the disclosure, the first direction, the second direction, and the third direction are pairwise perpendicular. In other words, in those embodiments, the second direction is arranged orthogonal to the first direction, and the third direction is arranged orthogonal to the first direction and orthogonal to the second direction.

In embodiments, some or all of the separator means have a flat planar shape. In embodiments, some or all of the separator means having a flat planar shape extend perpendicular to the first direction, i. e., perpendicular to the stack direction.

In embodiments, the back separator has a flat planar shape. Thereby, the back separator may extend perpendicular to the third direction.

In embodiments, the first row of terminals extends parallel to the first direction. Also, the second row of terminals may extend parallel to the first direction. The second row of terminals may be spaced apart from the first row of terminals. Further, the row of venting outlets may extend parallel to the first direction.

In embodiments, the battery cells are all shaped identically. The terminal sides of all battery cell may be arranged such that there is one plane, along which extend the terminal sides of each of the battery cells.

In embodiments of battery module according to the disclosure, each of first terminals acts as the positive terminal of its respective battery cells, and each of the second terminals acts as the negative terminal of its respective battery cell. In other words, in those embodiments, the first row of terminals is formed exclusively by positive terminals, and the second row of terminals is formed exclusively by negative terminals. In such embodiments, all first terminals may be electrically interconnected to each other to form the positive pole of the battery module, while all second terminals may be electrically interconnected to each other to form the negative pole of the battery module. In the latter case, the battery cells of the battery module are connected in parallel.

In alternative embodiments of battery module according to the disclosure, the terminals of the first row of terminals act alternating as positive and negative terminals of their respective battery cells, and the terminals of the second row of terminals act alternating as negative and positive terminals of their respective battery cells, when viewing into the stack direction, the first row of terminals thereby starting with a positive terminal and the second row of terminals thereby starting with a negative terminal. In such embodiments, when viewing into the stack direction, the negative terminal of each of the battery cells (except for the last battery cell) may be electrically connected to the positive terminal of the respective following battery cell, while the positive terminal of the first battery cell forms the positive terminal of the battery module, and the negative terminal of the last battery cell forms the negative terminal of the battery module. In the latter case, the battery cells of the battery module are connected in series.

In embodiments, for some or all pairs of neighbored separator means, the opening of the space formed between the respective pair of neighbored separator means extends, with regard to the first direction, from one separator means of the respective pair of separator means to the other separator means of the respective pair of separator means. In other words, in such embodiments, the compartments formed by at least some of pairs of neighbored separator means and the back separator is not confined at all into the third direction. This provides, with regard to the first direction, a maximum width of the openings of such compartments. A large / maximum cross-section of the openings is desirable to provide enough space for the venting gas ejected into a compartment from the battery cell in case of a thermal run-away at high pressure to expand and escape from the compartment with an adequate flow rate. As the opening of the space faces into the third direction (i.e., lengthwise direction of the terminal side), venting products (such as venting gas and particles like debris and/or dust) can be ejected more easily and further. This efficiency is due to the prismatic shape of the battery cells, which feature rectangular sides.

In one embodiment according to the first aspect, the back separator continuously extends between the first row of terminals and the row of venting outlets. In such an embodiment, the first terminals are each shielded by the back separator from dust and/or debris generated in case of a thermal run-away.

In one embodiment according to the first aspect, the guiding means further includes a cover connected to each of the separator means and the back separator on edges of the separator means and the back separator opposite to the battery cell stack. In such embodiment, the compartments or venting-chambers formed between any two neighbored separator means are also spatially confined into the second direction. Hence, the only outlet for a venting gas ejected, from at least one venting outlet, into a compartment formed between two neighbored separator is the opening into the third direction formed between the two adjacent separator means. Consequently, in such an embodiment, the third direction is the dominant and dedicated flow direction of the venting gas upon leaving the compartments or venting-chambers. Also, the third direction will remain the dominant flow direction of the venting gas after leaving the compartments, unless the gas would be deflected by other mechanical means such as suitable shields, guides, and or walls.

In such embodiments, the openings of some or all of the compartments or venting-chambers (i. e., the space formed between pairs of neighbored separator means, the back separator, the cover, and the terminal sides of the battery cells) extend, with regard to the first direction, from one separator means of the respective pair of separator means to the other separator means of the respective pair of separator means and, with regard to the second direction, from the battery cell stack to the cover. This provides, with regard to the first direction and the second direction, a maximum width / height of the openings of such compartments. A large / maximum cross-section of the openings is desirable to provide enough space for the venting gas ejected into a compartment from the battery cell in case of a thermal run-away at high pressure to expand and escape from the compartment with an adequate flow rate.

In one embodiment according to the first aspect, the battery module further includes at least one terminal shield, wherein the at least one terminal shield spatially separates the second row of terminals from the venting space. In such an embodiment, at least some of the second terminals are shielded, by the at least one terminal shield, from venting gas streaming, in case of a thermal run-away, out of one or more compartments into the third direction.

In embodiments, a single terminal shield is used that extends along the complete length of the second row of terminals. In alternative embodiments, several terminal shields are used, each of the several terminal shields shielding only one of the second terminals or a group of neighbored second terminals.

In embodiments, each of the venting outlets is positioned, with respect to the first direction, between a pair of neighbored separator means.

In one embodiment according to the first aspect, for at least one pair of neighbored separator means, at least two venting outlets are arranged between the respective neighbored separator means with regard to the first direction.

For all pairs of neighbored separator means, at least two venting outlets may be arranged between the respective neighbored separator means with regard to the first direction. In such embodiments, the volume of the compartments is increased due to the larger distance of the neighbored separating means confining the compartment with regard to the first direction in comparison to embodiments, wherein only one venting outlet is positioned within a compartment. Hence, in such embodiments, the compartments provide more space for ejected venting gas to expand within the compartment before it escapes through the opening of the compartment.

In one embodiment according to the first aspect, the battery module further includes a housing.

In one embodiment according to the first aspect, the cover adjoins the housing or is formed as a portion of the housing.

In one embodiment according to the first aspect, the housing includes at least one battery module outlet configured to let pass venting products; and the at least one battery module outlet may be arranged on a side of the housing facing into the third direction. In such an embodiment, the housing of the battery module includes at least one outlet for discharging venting products (venting gas and particles such as debris and/or dust), which is arranged in the dominant or dedicated / intended flow direction of the venting gas (viz. parallel to the third direction) as described before. This allows for an efficient discharge of venting products out of the battery module housing, since the venting products are guided, by the guiding means, to the side of the housing including the at least one battery module outlet.

In one embodiment according to the first aspect, at least one venting outlet is arranged, with respect to the third direction, in the area of an opening of a space formed between a pair of two neighbored separator means into the third direction. In other words, in such an embodiment, there is at least one venting outlet being arranged in the area of the opening of the compartment, into which the venting outlet is opened.

In embodiments, each of the venting outlets is arranged, with respect to the third direction, in the area of an opening of a space formed between a pair of two neighbored separator means into the third direction. In such embodiments, each venting outlet is arranged in the area of the opening of the compartment, into which the venting outlet is opened.

In one embodiment according to the first aspect, at least one venting outlet opens into the interior of a space formed between a pair of two neighbored separator means. In other words, in such an embodiment, there is at least one venting outlet being arranged so as to open into the interior of one of the compartments.

In embodiments, each of the venting outlets opens into the interior of a space formed between a pair of two neighbored separator means. In such embodiments, each venting outlet opens into the interior of a compartment.

In one embodiment according to the first aspect, the guiding means is made of an electrically insulating and/or heat resistant material.

In some embodiments, all parts or members of the guiding means are made of electrically insulating and/or heat resistant material. Also, some or each of the guiding means are made of electrically insulating and heat resistant material. Some or each of the guiding means may be configured to resist temperatures up to at least 1300 °C. Some or each of the guiding means are made of mica or glass fiber reinforced plastic.

In one embodiment according to the first aspect, the at least some of the separator means extend, with regard to the third direction, from the back separator to a position between the first row of terminals and the second row of terminals.

In embodiments, each of the separator means extends, with regard to the third direction, from the back separator to a position between the first row of terminals and the second row of terminals. In such embodiments, there is space left, with regard to the third direction, between the guiding means and the ends of the battery cells facing into the third direction. This space allows to an expansion of the venting gas after escaping from a compartment, which is desirable, as the venting gas is ejected in a rather hot state and at a high pressure from the battery cells and thus requires space for expanding after being ejected.

In embodiments, each of the separator means extends, with regard to the third direction, from the back separator to the row of venting outlets. The row of venting outlets may thereby be arranged, with respect to the third direction, in the middle between the first row of terminals and the second row of terminals.

In one embodiment according to the first aspect, at least one of the separator means is arranged, with regard to the first direction, between a pair of adjacent battery cells.

In embodiments, each of the separator means is arranged, with regard to the first direction, between a pair of adjacent battery cells.

In embodiments, the back separator is arranged, with regard to the third direction, immediately in front of the first row of terminals. For example, the back separator, when made of an insulating material, may abut to the first terminals. Alternatively, the back separator may be spaced apart from the first row of terminals by a distance of less than 1 cm, e. g., 1 mm, 2 mm, or 3 mm.

A second aspect of the present disclosure relates to a battery system including one or more battery modules according to the first aspect of the present disclosure.

A third aspect of the present disclosure relates to a vehicle including at least one battery module according to the first aspect and/or at least one battery system according to the second aspect.

To summarize the above, one improvement of the proposed battery module according to the first aspect is to sub-divide the venting space above the cells or a cell stack within a battery system into smaller portions to prevent an overall deposition of the particles (such as metallic and graphite particles) flowing and carried along with the venting gas. These particles will remain more within a dedicated area heading towards the provided exit of the subdivided space to further exit the battery system. The other sub-divided areas will not be harmed by dust and debris, and so can better handle the thermal run-away once the heat reaches another area as well. The battery module according to the first aspect allows to fence the ejected (metallic and graphite) particles of a battery cell or battery cell stack during a thermal run-away inside the battery module within a sub-divided location (compartment) and to shield the other sub-divided sections (compartments) so as to avoid or at least reduce their suffering from the same hot dust and debris.

### Specific Embodiments

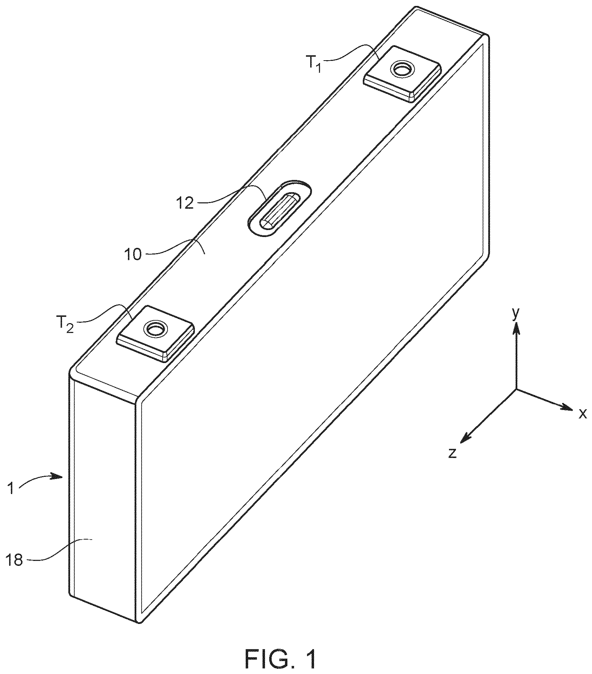

A battery module or battery system commonly includes one or more stacks of battery cells. Usually, the individual battery cells of one of those stacks are shaped identically or essentially identically to each other. As an example, the design of a typical state-of-the-art battery cell 1 used in a battery cell stack is schematically illustrated in Figure 1 with reference to a Cartesian coordinate system in a perspective view. The battery cell 1 has a prismatic (cuboid) shape. On an upper side face 10 of the battery cell 1 (i. e., the battery cell's side surface facing into the y-direction of the coordinate system), a first terminal T₁ and a second terminal T₂ are arranged. Accordingly, the upper side surface 10 will in the following be referred to as the "terminal side" of battery cell 1. The terminals T₁, T₂ allow for an electrical connection of the battery cell 1. The first terminal T₁ may be the positive terminal of the battery cell 1, and the second terminal T₂ may be the negative terminal of the battery cell 1. Furthermore, between the first terminal T₁ and the second terminal T₂, a venting outlet 12 is arranged on the upper side face 10.

Through the venting outlet 12, venting gas can be ejected from the battery cell 1 in case of a thermal event occurring in the battery cell 1 such as a thermal run-away. Inside the battery cell 1, a valve (not shown) is usually installed upstream of the venting outlet 12, the valve being configured to open if the gas pressure inside the battery cell exceeds a predefined value, and to remain in a closed stated otherwise, i. e., if the gas pressure inside the battery cell is below the predefined value. Thus, before being output via the venting outlet 12, the venting gas may pass the venting valve arranged inside the battery cell 1.

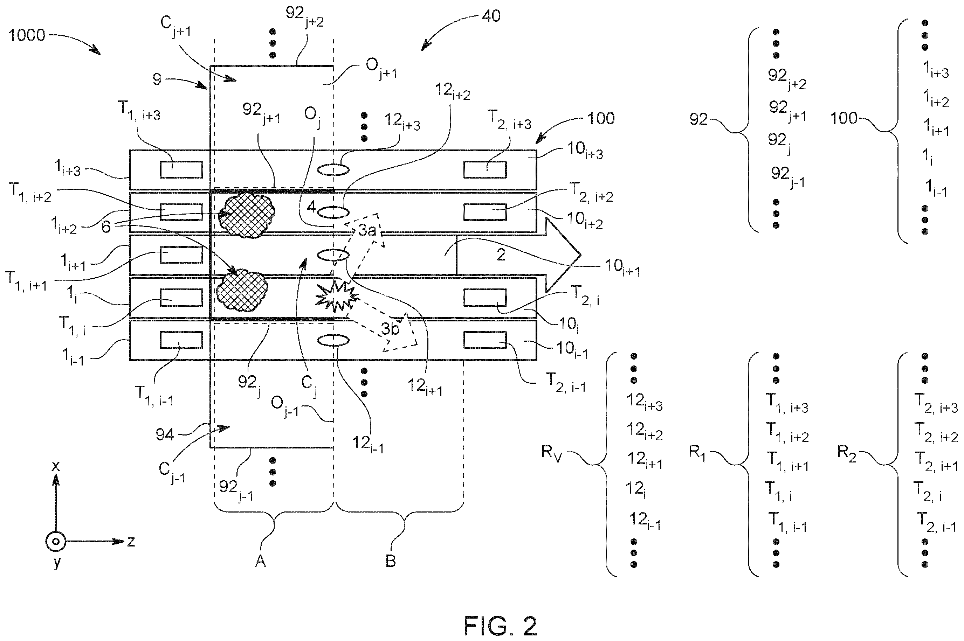

By stacking together, a plurality of battery cells each being designed like the battery cell 1 shown in Fig. 1 along a first direction parallel to the axis x of the coordinate system, a stack of battery cells 100 is created like, e. g., the stack 100 including battery cells 1ᵢ₋₁, 1ᵢ, 1ᵢ₊₁, 1ᵢ₊₂, and 1ᵢ₊₃ schematically depicted in Fig. 2.

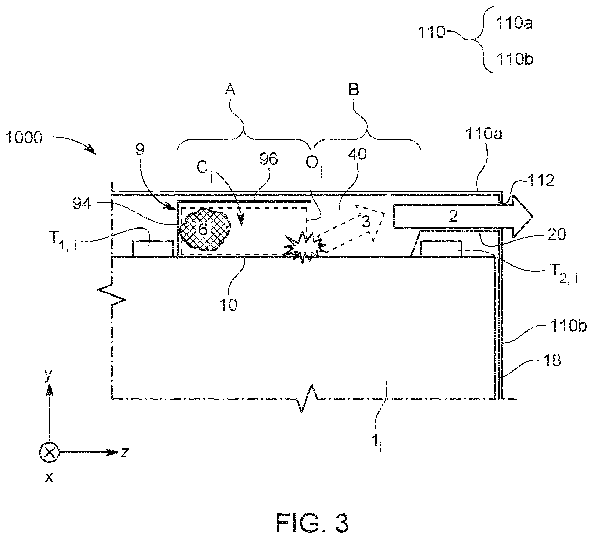

Figure 2 illustrates a schematic top-view of a battery module 1000 according to an embodiment of the present disclosure. The battery module 1000 includes a battery cell stack 100, a venting space 40 and guidance means 9. As already said above, the battery cell stack 100 includes a plurality of battery cells 1ᵢ₋₁, 1ᵢ, 1ᵢ₊₁, 1ᵢ₊₂, and 1ᵢ₊₃. Here and in the following, the index i of reference numerals shall relate to the position of the referenced object with regard to the stack direction, i. e., the x-direction. The dots above and below the battery cell stack 100 shall schematically indicate that the stack 100 may include more battery cells arranged above and below the shown battery cells and may thus be actually longer than depicted in Fig. 2. In other words, Fig. 2 only shows a part of the battery cell stack 100, the part including five neighbored battery cells. The complete stack 100 may, however, include more than five battery cells, e. g., 10 battery cells, 20 battery cells, 30 battery cells, 40 battery cells, 50 battery cells, or even more battery cells. Since all battery cells 1ᵢ₋₁, 1ᵢ, 1ᵢ₊₁, 1ᵢ₊₂, 1ᵢ₊₃ are shaped identically, the respective first terminals T_{1,i-1}, T_{1,i}, T_{1,i+1}, T_{1,i+2}, T_{1,i+3} of the battery cells 1ᵢ₋₁, 1ᵢ, 1ᵢ₊₁, 1ᵢ₊₂, 1ᵢ₊₃ are arranged in a first row R₁ of terminals, the first row R₁ arranged parallel to the x-axis of the coordinate system. Likewise, the respective second terminals T_{2,i-1}, T_{2,i}, T_{2,i+1}, T₂,ᵢ₊₂, T₂,ᵢ₊₃ of the battery cells 1ᵢ₋₁, 1ᵢ, 1ᵢ₊₁, 1ᵢ₊₂, 1ᵢ₊₃ are arranged in a second row R₂ of terminals, the second row R₂ arranged parallel to the x-axis of the coordinate system. Also, the respective venting outlets 12ᵢ₋₁, 12ᵢ, 12ᵢ₊₁, 12ᵢ₊₂, 12ᵢ₊₃ of the battery cells 1ᵢ₋₁, 1ᵢ, 1₁₊₁, 1ᵢ₊₂, 1ᵢ₊₃ are arranged in a row R_{V} of venting outlets, the row R_{V} of venting outlets arranged parallel to the x-axis of the coordinate system. The depicted battery cell stack 100 may be accommodated in a housing 110 (not shown in Fig. 2; partly shown in Fig. 3). In the other words, the battery module 1000 may further include the housing 110. Above the battery cell stack 100, the venting space 40 extends along the terminal sides 10ᵢ₋₁, 10ᵢ, 10ᵢ₊₁, 10ᵢ₊₂, 10ᵢ₊₃ of the battery cells 1ᵢ₋₁, 1ᵢ, 1ᵢ₊₁, 1ᵢ₊₂, 1ᵢ₊₃.

On top of the battery cell stack 100, the guiding means 9 is arranged. The guiding means 9 includes a plurality of separator means 92 (the individual separator means referenced by numerals 92ⱼ₋₁, 92ⱼ, 92ⱼ₊₁, 92ⱼ₊₂ in Fig. 2) and a back separator 94. Along the y-direction (i. e., upward from the drawing plane of Fig. 2), each of the separator means 92ⱼ₋₁, 92ⱼ, 92ⱼ₊₁, 92ⱼ₊₂ protrudes from the battery cell stack 100 into the venting space 40 and extends perpendicularly to the first direction x. In other words, in the shown embodiment of a battery module, each of the separator means 92ⱼ₋₁, 92ⱼ, 92ⱼ₊₁, 92ⱼ₊₂ extends parallel to the y-z-plane of the coordinate system. Hence, the venting space 40 is partially sub-divided by the plurality of separator means 92.

Each of the separator means 92ⱼ₋₁, 92ⱼ, 92ⱼ₊₁, 92ⱼ₊₂ extends, with regard to the third direction z, in an area A located between the first row R₁ of terminals and the row R_{V} of venting outlets. Hence, in the area A, the venting space 40 is sub-divided into a plurality of compartments Cⱼ₋₁, Cⱼ, Cⱼ₊₁, each of the compartments Cⱼ₋₁, Cⱼ, Cⱼ₊₁ being formed between a pair of neighbored separator means. For example, a, j-th compartment Cⱼ is formed between the pair of neighbored separator means 92ⱼ and 92ⱼ₊₁. Also, a (j-1)-th compartment Cⱼ₋₁ is formed between the pair of neighbored separator means 92ⱼ₋₁ and 92ⱼ, and a (j+1)-th compartment Cⱼ₊₁ is formed between the pair of neighbored separator means 92ⱼ₊₁ and 92ⱼ₊₂. As the stack of battery cells 100 may extend further in and against the x-direction, the guiding means 9 may include further separator means (not shown) that are arranged in a corresponding manner in and against the x-direction above and below the shown part of the guiding means 9. This is schematically indicated in Fig. 2 by the dots above and below the guiding means 9.

Against the z-direction, each of the compartments Cⱼ₋₁, Cⱼ, Cⱼ₊₁ is confined by the back separator 94. The back separator 94 is thus connected to the left edges (with regard to Fig. 2) of each of the separator means 92ⱼ₋₁, 92ⱼ, 92ⱼ₊₁, 92ⱼ₊₂. In advantageous embodiments of the battery module 1000, the connections of the back separator 94 to the separator means 92ⱼ₋₁, 92ⱼ, 92ⱼ₊₁, 92ⱼ₊₂ are gas-tight and/or fluid-tight to prevent an exchange of venting gas through gaps in the connections. The back separator 94 extends, parallel to the x-y-plane of the coordinate system, along the complete length of the guiding means 9 with regard to the x-direction. With regard to the z-direction, the back separator 94 is arranged between the first row R₁ of terminals and the row R_{V} of venting outlets. In the shown example, the back separator 94 is arranged immediately in front of the first terminals T_{1,i-1}, T_{1,i}, T_{1,i+1}, T_{1,i+2}, T_{1,i+3} (on their respective right sides with respect to Figs. 2).

Further, the guiding means 9 may include a cover 96 (not shown in Fig. 2; shown in Fig. 3), extending parallel to the x-z-plane of the coordinate system. The arrangement of the cover 96 is illustrated in Figure 3, which schematically illustrates a cross-sectional cut through the battery module 1000 of Fig. 2, the cut being taken parallel to the y-z-plane of the coordinate system through the i-th battery cell 1ᵢ of battery cell stack 100. The cover 96 is connected to the upper edges (with regard to the orientation of the y-axis) of each of the separator means 92ⱼ₋₁, 92ⱼ, 92ⱼ₊₁, 92ⱼ₊₂ as well as of the back separator 94. Hence, the cover 96 confines any one of the compartments Cⱼ₋₁, Cⱼ, Cⱼ₊₁ in the y-direction. In advantageous embodiments of the battery module 1000, the connections of the cover 96 to the back separator 94 as well as to the separator means 92ⱼ₋₁, 92ⱼ, 92ⱼ₊₁, 92ⱼ₊₂ are each gas-tight and/or fluid-tight to prevent an exchange of venting gas through gaps in the connections. In the shown embodiment, the cover 96 adjoins a top plate 110a of the housing 110. In alternative embodiments the cover 96 may be formed by a portion of the top plate 110a in an area A of the guiding means 9.

As can be taken from the above, each of the compartments Cⱼ₋₁, Cⱼ, Cⱼ₊₁ are basically shaped like a cuboid box being confined, at 5 sides, by a pair of neighbored separator means 92 (at its lateral sides), by the back separator 94 (at its rear side), by the cover 96 (at its top side), and by the battery cell stack 100 (at its bottom side). The remaining side (i. e., the side facing into the z-direction), however, is not confined and thus remains open.

The guiding means 9 may extend along the complete length of the battery cell stack 100 (i. e., the series of compartments Cⱼ₋₁, Cⱼ, Cⱼ₊₁ arranged along the x-direction). Then, all battery cells 1ᵢ₋₁, 1ᵢ, 1ᵢ₊₁, 1ᵢ₊₂, 1ᵢ₊₃ are covered by at least one of the compartments Cⱼ₋₁, Cⱼ, Cⱼ₊₁. In the shown embodiment, the separator means 92ⱼ₋₁, 92ⱼ, 92ⱼ₊₁, 92ⱼ₊₂ are each arranged between two adjacent battery cells. For example, the j-th separator means 92ⱼ is arranged at the border between the battery cell 1ᵢ₋₁ and the battery cell 1ᵢ, and the (j+1)-th separator means 92ⱼ₊₁ is arranged at the border between the battery cell 1ᵢ₊₂ and the battery cell 1ᵢ₊₃. Hence, with regard to the x-direction, the j-th compartment Cⱼ is arranged precisely on top of the three adjacent battery cells 1ᵢ, 1ᵢ₊₁, 1ᵢ₊₂. This applies correspondingly to the location of the other compartments of the guiding means 9 with regard to the position of the terminal sides.

Note that in the illustrated embodiment, the guiding means 9 is arranged, with regard to the z-direction, only in the area A between the first row R₁ of terminals and the row R_{V} of venting outlets. Hence, an area B of the venting space 40 located between the row R_{V} of venting outlets and the second row R₂ of terminals-or, with reference to Fig. 3, between the row R_{V} of venting outlets and at least one terminal shield 20-remains void.

As can be seen from Fig. 3, the second terminal T_{2,i} may be shielded from the venting space 40 by the terminal shield 20 from the venting space 40. Each second terminal T_{2,i-1}, T_{2,i}, T_{2,i+1}, T₂,ᵢ₊₂, T₂,ᵢ₊₃ may be shielded by an individual terminal shield 20. However, alternatively, the terminal shield 20 may extend, with regard to the x-direction, along the complete length of the second row of terminals R₂ such that all second terminals T_{2,i-1}, T_{2,i}, T_{2,i+1}, T₂,ᵢ₊₂, T₂,ᵢ₊₃ of the battery module are shielded at once by the terminal shield 20.

At least some components of the guiding means 9 may be made of an electrically insulating and/or heat resistant material, for example mica or glass fiber reinforced plastic. For example, the separator means 92ⱼ₋₁, 92ⱼ, 92ⱼ₊₁, 92ⱼ₊₂ and/or the back separator 94 are made of an electrically insulating and/or heat resistant material. Also, the cover 96 may be made of the electrically insulating and/or heat resistant material. Further, the at least one terminal shield 20 may be made of the electrically insulating and/or heat resistant material.

In the embodiment illustrated in Fig. 3, the housing 110 of the battery module 1000 includes a side wall 110b arranged along the small side faces 18 of the battery cells 1ᵢ₋₁, 1ᵢ, 1ᵢ₊₁, 1ᵢ₊₂, and 1ᵢ₊₃ (on the side of the second terminals T_{2,i-1}, T_{2,i}, T_{2,i+1}, T₂,ᵢ₊₂, T_{2,i+3}) along the complete extension of the battery cell stack 100 with regard to the x-direction. In the upper portion of the side wall 110b, more precisely, at a position, with regard to the y-direction, between the terminal shield 20 and the top plate 110a of the housing 110, the side wall 110b includes a battery module outlet 112, which serves as an outlet of the battery module, through which venting products (gas and particles) can be discharged from the interior of the battery module's housing 110 to the outside. The outlet 112 may include a plurality of openings, e. g., one opening per battery cell. Alternatively, the outlet may include one or more openings arranged along the x-direction, that extend each along the small side faces 18 of several battery cells. For example, the outlet 112 may be a slot extending along the complete side wall 110b.

Meanwhile, in case of a thermal event like a thermal run-away, venting gas is ejected from one or more affected battery cells, and particles (debris and/or dust) may be carried along with the venting gas at a rather high temperature (up to around 1300 °C). These venting products are ejected from the venting outlets 12 of the affected battery cells at high pressure and thus with a very high velocity. In Figs. 2 and 3, this is schematically illustrated by the flame symbol on top of the i-th battery cell 1ᵢ. The particles (e. g., graphite dust) may in addition be electrically conductive. Thus, due to their high temperature and electrical characteristics, a pollution and/or deposit of these particles, other battery cells of the battery cell stack 100 (and, for example, the electrical components installed on their surfaces) can be harmed by these particles or even destroyed.

However, in the battery module 1000 according to the present disclosure, the direction of propagation of the venting products is controlled by the guiding means 9 as described in the foregoing. So, for example, with reference to Figs. 2 and 3, venting gas ejected from the venting outlet 12ᵢ of battery cell 1ᵢ (hidden by the flame symbol indicating the ejection of venting products in Figs. 2 and 3) streams, in principle, radially in all directions starting from the position of the venting outlet 12ᵢ of battery cell 1ᵢ, allowing for an expansion of the venting gas (see the arrows 3, 3a, 3b schematically indicating some flow directions). However, the plurality of separator means 92, and, for example, the separator means 92ⱼ, 92ⱼ₊₁ next to the venting outlet 12ᵢ of battery cell 1ᵢ, form a mechanical obstacle for the stream of venting products with regard to the x-direction in the area A of the venting space 40. This way, a propagation of venting products along the x-direction may indeed not be fully prevented, but considerably reduced.

Also, due to the cover 96 and the top wall 110a of the battery module's housing 110, the propagation of venting products along the y-direction is confined to the area between the cover 96 and the top wall 110a. Thus, the flow of venting products takes place mainly parallel to the x-z-plane of the coordinate system. Against the z-direction, a flow of venting products is possible, but confined by the back separator 94 such that the first row R₁ of terminals is completely shielded from the venting products.

Furthermore, upon more venting gas streaming into the compartment Cⱼ, the venting gas already present in the compartment Cj is displaced and thus leaves the compartment Cⱼ, essentially into the z-direction. However, as the debris and/or dust carried along with the venting gas has a higher weight than the gas molecules, these heavier particles (debris and/or dust) would settle out and, at least a considerable amount of these particles, will thus remain in the compartment Cⱼ. This is indicated, in Figs. 2 and 3, schematically by lumps of particles 6. Consequently, at least the particles settled out in the compartment Cⱼ can no longer harm or destroy battery cells outside the compartment Cⱼ, for example, the battery cells 1ᵢ₋₁ or 1ᵢ₊₃. Thus, only the three battery cells 1ᵢ, 1ᵢ₊₁, 1ᵢ₊₂ immediately beneath the compartment Cⱼ will be mainly affected by the debris and/or dust ejected from battery cell 1ᵢ undergoing the thermal event.

The geometrical structure of the guiding means 9 thus causes the venting gas to stream with a flow having a main direction oriented into the z-direction, thus towards the battery module outlet 112, through which the venting gas-together with particles still remaining in the gas-then is discharged to the outside of the housing 110 of the battery module (schematically indicated by the arrow 2).

As described above, the structure of the guiding means 9 according to the illustrated embodiment does not prevent a deposit of particles of battery cells 1ᵢ₊₁, 1ᵢ₊₂ neighbored to the battery cell 1ᵢ, which are also located beneath the compartment Cⱼ. Of course, in alternative embodiments, the separator means 92ⱼ₋₁, 92ⱼ, 92ⱼ₊₁, 92ⱼ₊₂ may be positioned narrower than in the embodiment of Fig. 2 such that, e. g., exactly one compartment is located above one battery cell. In such embodiments, the guiding means 9 may provide a more protective effect for each battery neighboring a battery cell undergoing a thermal run-away. However, venting gas ejected from an affected battery cell leaves the battery cell under high pressure and thus requires sufficient space to immediately expand after leaving the battery cell. Hence, to allow for such an expansion, it is advantageous to enlarge the volume of the compartments adequately, e. g., by choosing a dimension for each compartment such that, along the x-direction, the distance of the neighbored separator means 92 confining the compartment corresponds to the width (along the x-direction) of more than one battery cell 1, e. g., to the width of three battery cells, as in the illustrated embodiment.

Furthermore, due to the same reason of providing enough space for an immediate expansion of ejected venting gas, it is advantageous to also choose the dimension of the compartments along the y-direction as large as possible, i. e., from the surface of the terminal sides 10 of the battery cells 1 to the top wall 110a of the battery module's housing 110 or at least to a cover 96 arranged immediately adjoining the top wall 110a (see Fig. 3). Also, for the same reason, it is advantageous to use a geometry of the guiding means 9 that leaves a considerable part of the venting space 40 above the battery cell stack 100 void. In the illustrated embodiment, this is realized by the fact that the guiding means 9 extends only in the area A (between the first row R₁ of terminals and the row R_{V} of venting outlets), but does not extend within or into the area B (between the row R_{V} of venting outlets and the second row R₂ of terminals / terminal shield 20).

As can be taken from the above description with reference to Figs. 2 and 3, the main idea behind the proposed solution is, to shield sub-divided sections (compartments) Cⱼ₋₁ and Cⱼ₊₁ from particles (such as metallic and graphite particles) of the venting gas of a battery cell 1ᵢ, 1ᵢ₊₁, 1ᵢ₊₂ within sub-divided section (compartment) Cⱼ during a thermal run-away, while at the same time ensuring enough space in case of venting of the cells in the sub-divided sections (compartments) Cⱼ₋₁ and/or Cⱼ₊₁.

Behind the design of the proposed battery module, there is the consideration that, in case of thermal run-away, venting gas is ejected at high pressure and needs a big enough cross section to expand. However, since the top wall of the battery module housing is often very close to the battery cell terminals, the only way to ensure a high enough cross section for an expansion of the venting is to design the separating means such that they do not completely extend to the battery module outlet, but only such that the venting outlets of the battery cells are covered. Thereby, the hot venting gas can funnel such that the needed cross-section is provided.

### Reference signs

- 1: battery cell
- 1ᵢ₋₁, 1ᵢ, 1ᵢ₊₁, 1ᵢ₊₂, 1ᵢ₊₃: battery cells
- 2: arrow indicating a streaming direction
- 3, 3a, 3b: arrows indicating a streaming direction
- 6: lumps of debris and/or dust
- 9: guiding means
- 10: terminal side
- 10ᵢ₋₁, 10ᵢ, 10ᵢ₊₁, 10ᵢ₊₂, 10ᵢ₊₃: terminal sides
- 12: venting outlet
- 12ᵢ₋₁, 12ᵢ, 12ᵢ₊₁, 12ᵢ₊₂, 12ᵢ₊₃: venting outlets
- 20: terminal shield
- 18: side face
- 40: venting space
- 92: plurality of separator means
- 92ⱼ₋₁, 92ⱼ, 92ⱼ₊₁, 92ⱼ₊₂: separator means
- 94: back separator
- 96: cover
- 100: battery cell stack
- 110: housing
- 110a: top wall of housing
- 110b: side wall of housing
- 112: battery module outlet
- 1000: battery module
- A, B: areas
- Cⱼ₋₁, Cⱼ, Cⱼ₊₁: compartments
- R₁: first row of terminals
- R₂: second row of terminals
- R_{V}: row of venting outlets
- T_{1,i-1}, T_{1,i}, T_{1,i+1}, T_{1,i+2}, T_{1,i+3}: first terminals
- T_{2,i-1}, T_{2,i}, T_{2,i+1}, T₂,ᵢ₊₂, T_{2,i+3}: second terminals
- Oⱼ₋₁, Oⱼ, Oⱼ₊₁: openings of compartments
- x, y, z: axes of a Cartesian coordinate system

## Claims

1. A battery module (1000), comprising:
a battery cell stack (100), the battery cell stack comprising a plurality of battery cells (1) stacked along a first direction (x);
each of the plurality of battery cells (1) having a terminal side (10) facing into a second direction (y), the second direction (y) oriented non-parallel to the first direction (x),
each of the terminal sides (10) comprising a first terminal (T₁), a second terminal (T₂), and a venting outlet (12), the first terminal (T₁) and the second terminal (T₂) positioned on a virtual straight line extending parallel to a third direction (z) oriented non-parallel to the first direction (x) and non-parallel to the second direction (y);
a venting space (40) extending along the battery cell stack (100) adjacent to the terminal sides (10), each of the venting outlets (12) opening into the venting space (40); and
a guiding means (9);
wherein the first terminals (T₁) are arranged in a first row of terminals (R₁), the second terminals (T₂) are arranged in a second row of terminals (R₂), and the venting outlets (12) are arranged in a row of venting outlets (R_{V}) arranged in between the first row of terminals (R₁) and the second row of terminals (R₂);
wherein the guiding means (9) comprises a plurality of separator means (92), each of the separator means (92) protruding from the battery cell stack (100) into the venting space (40) and extending transversely to the first direction (x);
wherein the guiding means (9) comprises a back separator (94) protruding from the battery cell stack (100) into the venting space (40) and extending transversely to the third direction (z);
wherein the back separator (94) is connected to each of the separator means (92), wherein each of the separator means (92) extends from the back separator (94) into the third direction (z); and
wherein at least some of the venting outlets (12) are positioned, with respect to the first direction (x), between two neighbored separator means (92); and
wherein the venting space (40) formed between two neighbored separator means (92) has an opening (Oⱼ₋₁, Oⱼ, Oⱼ₊₁) into the third direction (z).

2. The battery module (1000) according to claim 1, wherein the back separator (94) continuously extends between the first row of terminals (R₁) and the row of venting outlets (R_{V}).

3. The battery module (1000) according to claim 1 or 2, wherein the guiding means (9) further comprises a cover (96) connected to each of the separator means (92) and the back separator (94) on edges of the separator means (92) and the back separator (94) opposite to the battery cell stack (100).

4. The battery module (1000) according to any one of claims 1 to 3, further comprising at least one terminal shield (20), wherein the at least one terminal shield (20) spatially separates the second row of terminals (R₂) from the venting space (40).

5. The battery module (1000) according to any one of claims 1 to 4, wherein for at least one pair of neighbored separator means (92), at least two venting outlets (12) are arranged between the respective neighbored separator means (92) with regard to the first direction (x).

6. The battery module (1000) according to any one of claims 1 to 5, further comprising a housing (110).

7. The battery module (1000) according to claim 6, as long as depending on claim 3, wherein the cover (96) adjoins the housing (110) or is formed as a portion of the housing (110).

8. The battery module (1000) according to claim 6 or 7,
wherein the housing (110) comprises at least one battery module outlet (112) configured to let pass venting products; and
wherein the at least one battery module outlet (112) is arranged on a side of the housing (110) facing into the third direction (z).

9. The battery module (1000) according to any one of claims 1 to 8, wherein at least one venting outlet (12) is arranged, with respect to the third direction (z), in the area of the opening (Oⱼ₋₁, Oⱼ, Oⱼ₊₁) of the venting space (40) into the third direction.

10. The battery module (1000) according to any one of claims 1 to 9, wherein at least one venting outlet (12) opens into the interior of the venting space (40).

11. The battery module (1000) according to any one of claims 1 to 10, wherein the guiding means (9) is made of an electrically insulating and/or heat resistant material.

12. The battery module (1000) according to any one of claims 1 to 11, wherein the at least some of the separator means (92) extend, with regard to the third direction (z), from the back separator (94) to a position between the first row of terminals (R₁) and the second row of terminals (R₂).

13. The battery module (1000) according to any one of claims 1 to 12, wherein at least one of the separator means (92) is arranged, with regard to the first direction (x), between a pair of adjacent battery cells (1).

14. A battery system comprising one or more battery modules (1000) according to any one of claims 1 to 13.

15. A vehicle comprising at least one battery module (1000) according to any one of claims 1 to 13 and/or at least one battery system according to claim 14.

## Patentansprüche

1. Batteriemodul (1000), umfassend:
einen Batteriezellstapel (100), wobei der Batteriezellstapel eine Mehrzahl von Batteriezellen (1) umfasst, die entlang einer ersten Richtung (x) gestapelt sind;
wobei jede der Mehrzahl von Batteriezellen (1) eine Anschlussseite (10) aufweist, die in eine zweite Richtung (y) gewandt ist, wobei die zweite Richtung (y) nicht parallel zur ersten Richtung (x) ausgerichtet ist,
wobei jede der Anschlussseiten (10) einen ersten Anschluss (T₁), einen zweiten Anschluss (T₂) und einen Entlüftungsauslass (12) umfasst, wobei sich der erste Anschluss (T₁) und der zweite Anschluss (T₂) auf einer virtuellen geraden Linie befinden, die sich parallel zu einer dritten Richtung (z) erstreckt, die nicht parallel zur ersten Richtung (x) und nicht parallel zur zweiten Richtung (y) ausgerichtet ist;
einen Entlüftungsraum (40), der sich entlang des Batteriezellstapels (100) benachbart zu den Anschlussseiten (10) erstreckt, wobei jeder der Entlüftungsauslässe (12) in den Entlüftungsraum (40) mündet; und
ein Führungsmittel (9);
wobei die ersten Anschlüsse (T₁) in einer ersten Anschlussreihe (R₁) angeordnet sind, die zweiten Anschlüsse (T₂) in einer zweiten Anschlussreihe (R₂) angeordnet sind und die Entlüftungsauslässe (12) in einer Entlüftungsauslassreihe (R_{V}) angeordnet sind, die zwischen der ersten Anschlussreihe (R₁) und der zweiten Anschlussreihe (R₂) angeordnet ist;
wobei das Führungsmittel (9) eine Mehrzahl von Separatormitteln (92) umfasst, wobei jedes der Separatormittel (92) von dem Batteriezellstapel (100) in den Entlüftungsraum (40) hervorsteht und sich quer zur ersten Richtung (x) erstreckt;
wobei das Führungsmittel (9) einen Rückseparator (94) umfasst, der von dem Batteriezellstapel (100) in den Entlüftungsraum (40) hervorsteht und sich quer zur dritten Richtung (z) erstreckt;
wobei der Rückseparator (94) mit jedem der Separatormittel (92) verbunden ist, wobei sich jedes der Separatormittel (92) von dem Rückseparator (94) in die dritte Richtung (z) erstreckt; und
wobei sich mindestens einige der Entlüftungsauslässe (12) in Bezug auf die erste Richtung (x) zwischen zwei benachbarten Separatormitteln (92) befinden; und
wobei der zwischen zwei benachbarten Separatormitteln (92) ausgebildete Entlüftungsraum (40) eine Öffnung (Oⱼ₋₁, Oⱼ, Oⱼ₊₁) in die dritte Richtung (z) aufweist.

2. Batteriemodul (1000) nach Anspruch 1, wobei sich der Rückseparator (94) kontinuierlich zwischen der ersten Anschlussreihe (R₁) und der Entlüftungsauslassreihe (R_{V}) erstreckt.

3. Batteriemodul (1000) nach Anspruch 1 oder 2, wobei das Führungsmittel (9) ferner eine Abdeckung (96) umfasst, die mit jedem der Separatormittel (92) und dem Rückseparator (94) an Kanten der Separatormittel (92) und des Rückseparators (94) verbunden ist, die dem Batteriezellstapel (100) gegenüberliegend sind.

4. Batteriemodul (1000) nach einem der Ansprüche 1 bis 3, ferner umfassend mindestens eine Anschlussabschirmung (20), wobei die mindestens eine Anschlussabschirmung (20) die zweite Anschlussreihe (R₂) räumlich von dem Entlüftungsraum (40) trennt.

5. Batteriemodul (1000) nach einem der Ansprüche 1 bis 4, wobei für mindestens ein Paar benachbarter Separatormittel (92) mindestens zwei Entlüftungsauslässe (12) in Bezug auf die erste Richtung (x) zwischen den jeweiligen benachbarten Separatormitteln (92) angeordnet sind.

6. Batteriemodul (1000) nach einem der Ansprüche 1 bis 5, ferner umfassend ein Gehäuse (110).

7. Batteriemodul (1000) nach Anspruch 6, sofern von Anspruch 3 abhängig, wobei die Abdeckung (96) an das Gehäuse (110) angrenzt oder als ein Abschnitt des Gehäuses (110) ausgebildet ist.

8. Batteriemodul (1000) nach Anspruch 6 oder 7,
wobei das Gehäuse (110) mindestens einen Batteriemodulauslass (112) umfasst, der dazu konfiguriert ist, Entlüftungsprodukte passieren zu lassen; und
wobei der mindestens eine Batteriemodulauslass (112) an einer Seite des Gehäuses (110) angeordnet ist, die in die dritte Richtung (z) gewandt ist.

9. Batteriemodul (1000) nach einem der Ansprüche 1 bis 8, wobei mindestens ein Entlüftungsauslass (12) in Bezug auf die dritte Richtung (z) im Bereich der Öffnung (Oⱼ₋₁, Oⱼ, Oⱼ₊₁) des Entlüftungsraums (40) in die dritte Richtung angeordnet ist.

10. Batteriemodul (1000) nach einem der Ansprüche 1 bis 9, wobei mindestens ein Entlüftungsauslass (12) in das Innere des Entlüftungsraums (40) mündet.

11. Batteriemodul (1000) nach einem der Ansprüche 1 bis 10, wobei das Führungsmittel (9) aus einem elektrisch isolierenden und/oder hitzebeständigen Material hergestellt ist.

12. Batteriemodul (1000) nach einem der Ansprüche 1 bis 11, wobei sich die mindestens einigen der Separatormittel (92) in Bezug auf die dritte Richtung (z) von dem Rückseparator (94) zu einer Position zwischen der ersten Anschlussreihe (R₁) und der zweiten Anschlussreihe (R₂) erstrecken.

13. Batteriemodul (1000) nach einem der Ansprüche 1 bis 12, wobei mindestens eines der Separatormittel (92) in Bezug auf die erste Richtung (x) zwischen einem Paar benachbarter Batteriezellen (1) angeordnet ist.

14. Batteriesystem, umfassend ein oder mehrere Batteriemodule (1000) nach einem der Ansprüche 1 bis 13.

15. Fahrzeug, umfassend mindestens ein Batteriemodul (1000) nach einem der Ansprüche 1 bis 13 und/oder mindestens ein Batteriesystem nach Anspruch 14.

## Revendications

1. Module de batterie (1000), comportant :
un empilement d'éléments de batterie (100), l'empilement d'éléments de batterie comportant une pluralité d'éléments de batterie (1) empilés le long d'une première direction (x) ;
chacun de la pluralité d'éléments de batterie (1) ayant un côté de borne (10) orienté dans une deuxième direction (y), la deuxième direction (y) étant orientée non parallèlement à la première direction (x),
chacun des côtés de borne (10) comportant une première borne (T₁), une deuxième borne (T₂) et une sortie d'évent (12), la première borne (T₁) et la deuxième borne (T₂) étant positionnées sur une ligne droite virtuelle s'étendant parallèlement à une troisième direction (z) orientée non parallèlement à la première direction (x) et non parallèlement à la deuxième direction (y) ;
un espace d'évent (40) s'étendant le long de l'empilement d'éléments de batterie (100) adjacent aux côtés de borne (10), chacune des sorties d'évent (12) débouchant dans l'espace d'évent (40) ; et
un moyen de guidage (9) ;
dans lequel les premières bornes (T₁) sont agencées dans une première rangée de bornes (R₁), les deuxièmes bornes (T₂) sont agencées dans une deuxième rangée de bornes (R₂), et les sorties d'évent (12) sont agencées dans une rangée de sorties d'évent (R_{V}) agencées entre la première rangée de bornes (R₁) et la deuxième rangée de bornes (R₂) ;
dans lequel le moyen de guidage (9) comporte une pluralité de moyens séparateurs (92), chacun des moyens séparateurs (92) faisant saillie à partir de l'empilement d'éléments de batterie (100) dans l'espace d'évent (40) et s'étendant transversalement à la première direction (x) ;
dans lequel le moyen de guidage (9) comporte un séparateur arrière (94) faisant saillie à partir de l'empilement d'éléments de batterie (100) dans l'espace d'évent (40) et s'étendant transversalement à la troisième direction (z) ;
dans lequel le séparateur arrière (94) est relié à chacun des moyens séparateurs (92), dans lequel chacun des moyens séparateurs (92) s'étend à partir du séparateur arrière (94) dans la troisième direction (z) ; et
dans lequel au moins certaines des sorties d'évent (12) sont positionnées, par rapport à la première direction (x), entre deux moyens séparateurs (92) voisins ; et
dans lequel l'espace d'évent (40) formé entre deux moyens séparateurs (92) voisins présente une ouverture (Oⱼ₋₁, Oⱼ, Oⱼ₊₁ ) dans la troisième direction (z).

2. Module de batterie (1000) selon la revendication 1, dans lequel le séparateur arrière (94) s'étend en continu entre la première rangée de bornes (R₁) et la rangée de sorties d'évent (R_{V}).

3. Module de batterie (1000) selon la revendication 1 ou 2, dans lequel le moyen de guidage (9) comporte en outre un couvercle (96) relié à chacun des moyens séparateurs (92) et au séparateur arrière (94) sur des bords des moyens séparateurs (92) et du séparateur arrière (94) opposés à l'empilement d'éléments de batterie (100).

4. Module de batterie (1000) selon l'une quelconque des revendications 1 à 3, comportant en outre au moins un blindage de borne (20), dans lequel l'au moins un blindage de borne (20) sépare spatialement la deuxième rangée de bornes (R₂) de l'espace d'évent (40).

5. Module de batterie (1000) selon l'une quelconque des revendications 1 à 4, dans lequel pour au moins une paire de moyens séparateurs (92) voisins, au moins deux sorties d'évent (12) sont agencées entre les moyens séparateurs (92) voisins respectifs par rapport à la première direction (x).

6. Module de batterie (1000) selon l'une quelconque des revendications 1 à 5, comportant en outre un boîtier (110).

7. Module de batterie (1000) selon la revendication 6, tant qu'il dépend de la revendication 3, dans lequel le couvercle (96) est adjacent au boîtier (110) ou est formé comme une partie du boîtier (110).

8. Module de batterie (1000) selon la revendication 6 ou 7,
dans lequel le boîtier (110) comporte au moins une sortie de module de batterie (112) configurée pour laisser passer des produits d'évent ; et
dans lequel l'au moins une sortie de module de batterie (112) est agencée sur un côté du boîtier (110) orienté dans la troisième direction (z).

9. Module de batterie (1000) selon l'une quelconque des revendications 1 à 8, dans lequel au moins une sortie d'évent (12) est agencée, par rapport à la troisième direction (z), dans la zone de l'ouverture (Oⱼ₋₁, Oⱼ, Oⱼ₊₁) de l'espace d'évent (40) dans la troisième direction.

10. Module de batterie (1000) selon l'une quelconque des revendications 1 à 9, dans lequel au moins une sortie d'évent (12) débouche dans l'intérieur de l'espace d'évent (40).

11. Module de batterie (1000) selon l'une quelconque des revendications 1 à 10, dans lequel le moyen de guidage (9) est composé d'un matériau électriquement isolant et/ou résistant à la chaleur.

12. Module de batterie (1000) selon l'une quelconque des revendications 1 à 11, dans lequel l'au moins une partie des moyens séparateurs (92) s'étend, par rapport à la troisième direction (z), à partir du séparateur arrière (94) vers une position entre la première rangée de bornes (R₁) et la deuxième rangée de bornes (R₂).

13. Module de batterie (1000) selon l'une quelconque des revendications 1 à 12, dans lequel au moins un des moyens séparateurs (92) est agencé, par rapport à la première direction (x), entre une paire d'éléments de batterie adjacents (1).

14. Système de batterie comportant un ou plusieurs modules de batterie (1000) selon l'une quelconque des revendications 1 à 13.

15. Véhicule comportant au moins un module de batterie (1000) selon l'une quelconque des revendications 1 à 13 et/ou au moins un système de batterie selon la revendication 14.
